# EUROPEAN PATENT APPLICATION

(11) **EP 1 897 448 A1**
(43) Date of publication of application: **12.03.2008**
(21) Application number: 06756797.4
(22) Date of filing: 31.05.2006
(51) Int. Cl.: A23L 1/10

(54) **QUALITY-IMPROVING AGENT FOR COOKED RICE, COOKED RICE PRODUCT USING THE SAMENT AND METHOD OF THE PREPARATION THEREOF**

(30) Priority: 03.06.2005 JP 2005164817
(71) Applicant: FUJI OIL COMPANY, LIMITED, Osaka-shi, Osaka 5420086 (JP)
(72) Inventor: ADACHI, Norifumi, c/o Fuji Oil Co. Ltd, Izumisano-shi, Osaka 5988540 (JP); TAKAHASHI, Taro, c/o Fuji Oil Co. Ltd, Izumisano-shi, Osaka 5988540 (JP)
(74) Representative: Colombet, Alain André
(86) International application number: PCT/JP2006/310849
(87) International publication number: WO 2006/129691

(57) **Abstract**

[PROBLEMS] To provide a quality-improving agent for cooked rice for improving the loosening properties of cooked rice and obtaining a cooked rice product with excellent qualities such as a soft and puffy texture and suppressed denaturation accompanying the aging of starch during preservation. To provide a processed cooked rice product having excellent qualities by using the same.

[MEANS FOR SOLVING PROBLEMS] The loosening properties of cooked rice are improved by using, as the active ingredient, a water-soluble protein having been extracted and concentrated from pork, chicken, beef, fish, etc. and having a jelly strength of lower than 50 g. By combining this extract with water-soluble polysaccharides originating in soybean and using as a quality-improving agent for cooked rice, a processed cooked rice product having a soft and puffy texture and suffering from little denaturation in qualities during preservation can be obtained.

## Description

### Technical Field

The present invention relates to the field of cooked rice products such as polished rice, fried rice and pilaf, and particularly it relates to an agent that improves the quality, such as the loosening property and texture, of cooked rice products, as well as to improved cooked rice. More specifically, it relates to a process of using animal-derived extracts and soybean water-soluble polysaccharides as quality improving agents to enhance the loosening property of cooked rice, inhibit the deterioration in texture that occurs with aging of starch, and obtain cooked rice products with satisfactory quality.

### Background Art

In recent years, the requirements for processed foods have been increasing as living environments continue to diversify. This has led to, among other trends, increased usage of cooked rice products including boxed lunches and rice balls from convenience stores, frozen cooked rice products that can be promptly consumed after simple heating with a microwave oven and sterile packed cooked rice, and the demand is rising for such products that are also delicious and of high quality. The most important quality indicators for such cooked rice products are the loosening property of the cooked rice and a minimal reduction in texture occurring with aging of the starch during prolonged storage. For example, the taste of fried products such as fried rice and pilaf depends on the separated looseness of the cooked rice. The loosening property of cooked rice is also important during the steps of preparation, as cooked rice with a satisfactory loosening property helps prevent adhesion between the rice grains and along the production line, thus inhibiting quality impairment such as splitting or deformation of the rice grains while also improving working efficiency. The loosening property is also important for frozen cooked rice products. Frozen cooked rice products are prepared by freezing cooked rice in a loosened state for convenience during packaging and for uniform restoration upon thawing, and the loosening property of the cooked rice is also an important quality-determining factor during the loosened freezing step.

On the other hand, cooked rice that has been boiled in bulk has recently been distributed by the "nakashoku" (prepared take-out food) industry to storefronts. Consumers therefore often eat boxed lunches containing rice that has passed a considerable time after boiling, and it is becoming important to avoid deterioration in taste that occurs as cooked rice that has aged undergoes hardening or drying.

In view of the technical issues involving quality, methods for improving the loosening property of cooked rice grains and inhibiting deterioration in taste that occurs with storage have been sought and thoroughly investigated in the prior art. Proposed methods for improving the loosening property include, for example, a method of adding a rice boiling oil during boiling (Patent document 1), methods of adding oil-in-water emulsions obtained by emulsification of edible oils (Patent documents 2, 3) and a method of adding an emulsifying agent during boiling (Patent document 4). However, further improvements have been desired because of problems such as poor dispersibility in the boiling water leading to uneven effects on the cooked rice, increased oiliness creating poor taste and texture, and lack of a sufficient loosening property.

As methods of inhibiting deterioration in taste during storage of cooked rice there have been proposed methods of enzyme treatment before and after boiling (Patent documents 5, 6) and a method of adding potassium salts or calcium salts (Patent document 7), but control of the enzyme activity is complex and taste is often impaired. There have also been disclosed methods of adding water-soluble hemicellulose during boiling of rice to improve the loosening property of the cooked rice while increasing the amount of water added in order to prevent taste deterioration during storage (Patent documents 8, 9), but the cooked rice loosening property has not always been adequate, and further improvement is desired. A method of improving the loosening property by using gelatin has also been proposed (Patent document 10), but the loosening effect has not been adequate, while increasing the amount of water added to inhibit deterioration with time softens the cooked rice and drastically reduces its texture.

[Patent document 1] Japanese Unexamined Patent Publication No. 2-142443
[Patent document 2] Japanese Unexamined Patent Publication No. 1-262762
[Patent document 3] Japanese Unexamined Patent Publication No. 2000-93098
[Patent document 4] Japanese Unexamined Patent Publication No. 2000-217522
[Patent document 5] Japanese Unexamined Patent Publication No. 52-117451
[Patent document 6] Japanese Unexamined Patent Publication No. 60-199355
[Patent document 7] Japanese Unexamined Patent Publication No. 2001-238617
[Patent document 8] Japanese Unexamined Patent Publication No. 2001-314161
[Patent document 9] Japanese Unexamined Patent Publication No. 2004-105197
[Patent document 10] Japanese Unexamined Patent Publication No. 2000-60459

### Disclosure of the Invention

### Problems to be Solved by the Invention

It is a major object of the invention to overcome the problems involving taste and manageability of cooked rice products by improving the loosening property of the cooked rice, and its further objects are to obtain cooked rice with a soft texture and with minimal loss of quality due to aging of the starch during storage, in order to obtain cooked rice products with satisfactory quality, as well as to obtain quality-improving agents for cooked rice that can achieve the above.

### Means for Solving the Problems

As a result of much diligent research in light of the problems mentioned above, the present inventors have discovered that the loosening property of cooked rice can be notably improved by using natural extracts obtained by extraction and concentration from animals such as pigs, chickens, cows or fish. It was further discovered that using a combination of these extracts with soybean-derived water-soluble polysaccharides (hereinafter referred to as "water-soluble soybean polysaccharides") significantly improves the loosening property and the cooked rice texture while resulting in a satisfactory storage life, and the invention has been completed upon this discovery.

That is, the present invention provides a looseness improving agent for cooked rice comprising as an active ingredient a natural extract containing an animal-derived water-soluble protein that coagulates upon cooling, and especially it provides a looseness improving agent for cooked rice wherein the natural extract is from the bone and/or meat of an animal such as a pig, chicken, cow or fish, characterized in that the solid content of the extract is at least 1 g and less than 50 g in terms of jelly strength. The invention further provides a method for preparation of cooked rice characterized by adding the aforementioned natural extract during boiling of rice, and a method for preparation of cooked rice wherein the amount of addition is 0.5-10 wt% with respect to the raw rice. The invention still further provides cooked rice products wherein the natural extract is added at 0.5-10 wt% with respect to the raw rice.

The invention still further provides a quality-improving agent for cooked rice comprising a natural extract that contains an animal-derived water-soluble protein that coagulates upon cooling, and a soybean-derived water-soluble polysaccharide, and a quality-improving agent for cooked rice wherein the natural extract is from the bone and/or meat of an animal such as a pig, chicken, cow or fish. It still further provides cooked rice products wherein the extract contains the water-soluble protein at 0.1-5% and the soybean-derived water-soluble polysaccharide at 0.05-2% with respect to the raw rice. The invention even further provides a method for preparation of cooked rice characterized by adding a quality-improving agent for cooked rice, comprising a natural extract that contains an animal-derived water-soluble protein that coagulates upon cooling, and a soybean-derived water-soluble polysaccharide, during the boiling of cooked rice.

### Effect of the Invention

According to the invention it is possible to obtain cooked rice with a satisfactory loosening property by addition of extracts. Moreover, by addition of the extracts and water-soluble soybean polysaccharides, it is possible to impart a satisfactory loosening property to cooked rice even with increased amounts of water added during boiling, and thus obtain cooked rice with a soft and elastic texture. It is also possible to obtain cooked rice that has minimal deterioration in taste as a result of hardening or drying due to aging of the starch, even after it has been stored for prolonged periods.

### Best Mode for Carrying Out the Invention

A natural extract in the invention is an extract obtained by ordinary means from an animal such as a pig, chicken, cow or fish. More specifically, it is obtained by hot extraction from bone or meat in hot water, followed by centrifugal separation of the filtrate and then concentration, and it is usually concentrated to a protein content of 30% or greater. The extraction method is not limited to the method mentioned above, and any conditions commonly employed for production of extracts may be used as desired.

Incidentally, extracts obtained by hot water extraction from meat or bones of animals have traditionally been used as natural seasonings in soups or sauces and as deep flavorings or flavoring bases for prepared foods and the like, but the knowledge has not existed that such extracts can improve the loosening property of cooked rice after boiling.

The major components of extracts are proteins, and the loosening effect of the invention is attributed to the proteins in the extracts. The proteins in the extracts are water-soluble, and extracts coagulate upon cooling as a property of the water-soluble proteins. Jelly strength is important for coagulation, and components with specific jelly strengths are preferably used. Specifically, it is particularly effective to use components characterized by having jelly strengths in the range of 1 g to 50 g, as measured according to the Japanese Industrial Standard "Glue and Gelatin", JIS K6503-2001.

The jelly strength is measured according to JIS in the following manner. A sample solution with a solid concentration of 6.67% is placed in a jelly cup and cooled for 17 hours in a thermostatic bath at 10°C to prepare jelly, after which the surface is pressed down 4 mm with a 12.7 mm-diameter plunger and the maximum compression stress is recorded as the jelly strength. Incidentally, while gelatin has been known as an animal-derived water-soluble protein, gelatin with a jelly strength of 50 g or greater according to the Japanese Industrial Standard "Glue and Gelatin", JIS K6503-2001 is generally defined as "gelatin" while gelatin with a jelly strength of less than 50 g is not currently found on the market.

As mentioned above, the extract in the invention preferably has a jelly strength of at least 1 g and less than 50 g, and even more preferably it has a jelly strength of at least 5 g and no greater than 30 g. If the jelly strength is greater than specified in the claims, the loosening property immediately after boiling will be satisfactory, but the protein in the extract will gel with lower boiled rice temperature, thus increasing adhesion, hardening the cooked rice and reducing the manageability and taste. On the other hand, if the jelly strength is below the range specified in the claims, the loosening property of the cooked rice will be significantly impaired. The jelly strength of an extract essentially corresponds to the jelly strength of the water-soluble protein that coagulates upon cooling in the extract.

A water-soluble soybean polysaccharide in the invention having any molecular weight can be used, but it is preferably a macromolecular compound and preferably has an average molecular weight of from a few thousand to several million, and specifically 5,000-1,000,000. If the molecular weight is too high, the viscosity will increase excessively and impair the manageability. The average molecular weight of the water-soluble soybean polysaccharide is the value determined by the limiting viscosity method, whereby the viscosity in a 0.1 mol NaNO₃ solution is measured using standard pullulan (Showa Denko K.K.) as the standard substance.

The water-soluble soybean polysaccharide may be obtained from a soybean polysaccharide-containing material by water extraction, or in some cases hot extraction under acidic or alkaline conditions, or decomposing elution with an enzyme.

The water-soluble soybean polysaccharide in the invention is preferably derived from soybean cotyledon, but okara obtained as a by-product during the production of tofu, soybean milk or separated soybean protein may also be used. The following is an example of a method for preparation of water-soluble soybean polysaccharide.

The water-soluble polysaccharides may be obtained by thermolysing okara at a pH near the isoelectric point of soybean protein, and preferably at a temperature between 80°C and 130°C or more preferably between 100°C and 130°C, separating the water-soluble fraction, and then either drying it directly or drying it after active carbon treatment, resin adsorption or ethanol precipitation for removal of the hydrophobic substances or low molecular substances.

The water-soluble soybean polysaccharides are polysaccharides containing galactose, arabinose, xylose, fucose, rhamnose and galacturonic acid as constituent sugars. Details regarding the analysis of the constituent components of water-soluble soybean polysaccharides obtained by hydrolysis may be found in Japanese Unexamined Patent Publication HEI No. 4-325058.

According to the invention, the water-soluble protein and water-soluble soybean polysaccharides can exhibit an improving effect on the quality and physical properties of cooked rice, but they may also be used in appropriate combination with other quality improvers or additives.

As other quality improvers or additives there may be mentioned emulsifying agents such as lecithin or glycerin fatty acid esters and sucrose fatty acid esters, oily substances such as ordinary animal and vegetable fats and oils or the fat-soluble vitamin tocopherol, monosaccharides such as ribose, arabinose, xylose, glucose, galactose and mannose, oligosaccharides such as sucrose, maltose, lactose, trehalose, raffinose, stachyose, fructooligosaccharide, galactooligosaccharide, xylooligosaccharide, lactosucrose and isomaltooligosaccharide, and polysaccharides including sugar alcohols such as erythritol, D-sorbitol and reduced lactose, as well as dextrin, agar, carrageenan, furcellaran, tamarind seed polysaccharides, tara gum, karaya gum, pectin, xanthan gum, sodium alginate, tragacanth gum, guar gum, locust bean gum, pullulan, gelan gum, gum arabic, hyaluronic acid, cyclodextrin, chitosan, carboxymethylcellulose (CMC), propylene glycol alginate ester, psyllium seed gum, cellulose, starches including starch and processed starch, or hydrolysates of these polysaccharides, proteinaceous substances including gelatin, whey or other albumin, casein sodium, soluble collagen, egg white, egg yolk and soybean protein, and pH regulators including salts such as table salt, alcohols such as ethanol, organic acids such as lactic acid and acetic acid, and organic acid salts such as sodium acetate.

The improving agent for cooked rice according to the invention can be distributed and sold in powder form, paste form or liquid form.

The mixing proportion of the extract and the water-soluble soybean polysaccharides in the improving agent of cooked rice according to the invention is 100:0-1:99 and preferably 100:0-20:80.

The invention will now be explained in greater detail. Pot boiling of rice will be used as an example of the invention, where the rice is washed, soaked and drained by ordinary methods and then the extract and water-soluble soybean polysaccharides are added to the rice boiling water prior to boiling.

The amount of water used for the rice boiling cannot be specified for all cases since it will differ depending on the type and age of the rice, but normally the rice will be boiled with an amount of water that is most suited for the type of rice and boiling conditions and that produces a satisfactory taste, which as a rule is about 120-160 wt% for raw rice. However, since the object of the invention is to impart a loosening property to cooked rice and inhibit deterioration in taste with time, it is important to increase the amount of water used for boiling. Specifically, it may be increased 103-130 wt% and preferably 105-120 wt% over the aforementioned optimum amount of water used for rice boiling.

The amount of extract added is preferably 0.5-10 wt% and more preferably 1-5 wt% with respect to the raw rice. Increasing the amount of addition above the range specified in the claims will not provide any further improvement in the loosening property of the cooked rice, and will instead produce a hard texture and reduced flavor. Reducing the amount of addition below the range specified in the claims will not allow a sufficient loosening property to be imparted to the cooked rice.

The amount of water-soluble soybean polysaccharides added is preferably 0.05-2 wt% and more preferably 0.1-1 wt% with respect to the raw rice. When a water-soluble soybean polysaccharide has been added within the range specified above, excessive softening of the cooked rice is inhibited and cooked rice with a satisfactory texture can be obtained even if the amount of water added for boiling is increased. Increasing the amount of addition above the range specified in the claims may result in cooked rice with a hard core. Reducing the amount of addition below the range specified in the claims will result in excessive softening of the cooked rice and reduced flavor due to the increased amount of water used for boiling.

The timing for addition of the improving agent for cooked rice is not particularly restricted, and it may be added prior to boiling or after boiling of the rice. However, it is most effectively added before boiling for enhanced texture of the cooked rice and prolonged storage life.

### Examples

Examples of the invention will now be explained, with the understanding that these are only illustrative and do not restrict the scope of the invention in any way. The "%" values mentioned in the examples are all based on weight.

In the examples described below, the animal-derived natural extract used was chicken extract with a protein content of 50% (jelly strength: 13.8 g). The water-soluble soybean polysaccharide used was commercially available "SOYAFIBE-S" (product of Fuji Oil Co., Ltd.).

### (Example 1)

Extract pre-dispersed in water was added to soaked and drained rice (Akitakomachi) to 0.5% with respect to the raw rice. More water was then added to a total water addition of 150% with respect to the raw rice, and the rice was boiled with a household rice cooker (Micon Rice Cooker ECJ-EA18 by Sanyo Electric Co., Ltd.). The cooked rice was then cooled to about 20°C by standing at room temperature and subjected to an organoleptic evaluation by 6 panelists. The remaining cooked rice was wrapped in 100 g portions and set in a 20°C incubator for 24 or 48 hours, after which an organoleptic evaluation was conducted in the same manner by the 6 panelists. The results of the organoleptic evaluation are shown in Table 1.

### (Example 2)

Example 1 was carried out under exactly the same conditions, except that the extract was added at 2.0% with respect to the raw rice.

### (Example 3)

Example 1 was carried out under exactly the same conditions, except that the extract was added at 2.0% and water was added to a total amount of 180% with respect to the raw rice.

### (Example 4)

Example 1 was carried out under exactly the same conditions, except that the extract was added at 10.0% and water was added to a total amount of 180% with respect to the raw rice.

### (Example 5)

Example 1 was carried out under exactly the same conditions, except that the extract was added at 2.0%, the water-soluble soybean polysaccharide was added at 0.2% and water was added to a total amount of 150% with respect to the raw rice.

### (Example 6)

Example 1 was carried out under exactly the same conditions, except that the extract was added at 2.0%, the water-soluble soybean polysaccharide was added at 0.2% and water was added to a total addition of 180% with respect to the raw rice.

### (Control group 1: control)

Example 1 was carried out under exactly the same conditions, except that no extract was added, and water was added during boiling to a total amount of 140% with respect to the raw rice.

### (Control group 2)

Control group 1 was repeated under exactly the same conditions, except that water was added during boiling to a total amount of 150% with respect to the raw rice.

### (Control group 3)

Control group 1 was repeated under exactly the same conditions, except that water was added during boiling to a total amount of 180% with respect to the raw rice.

### (Comparative Example 1)

Example 1 was carried out under exactly the same conditions, except that no extract was added, the water-soluble soybean polysaccharide was added at 0.05% and water was added to a total amount of 150% with respect to the raw rice.

### (Comparative Example 2)

Comparative Example 1 was carried out under exactly the same conditions, except that the water-soluble soybean polysaccharide was added at 0.2% with respect to the raw rice.

### (Comparative Example 3)

Comparative Example 1 was carried out under exactly the same conditions, except that the water-soluble soybean polysaccharide was added at 0.2% and water was added to a total amount of 180% with respect to the raw rice.

### (Comparative Example 4)

Comparative Example 1 was carried out under exactly the same conditions, except that the water-soluble soybean polysaccharide was added at 2.0% and water was added to a total amount of 180% with respect to the raw rice.

The evaluation of the cooked rice was conducted based on the following criteria.

### <Evaluation of loosening property>

A: Cooked rice separated into grains and very loose, B: Cooked rice sufficiently loose, C: Cooked rice slightly loose, D: Cooked rice clumped without looseness.

### <Texture>

A: Very good hardness and elasticity, B: Slightly hard or soft, but satisfactory, C: Very hard or soft, D: Too soft and sticky.

### <Storage life>

A: Very good hardness and elasticity, B: Satisfactory, C: Slightly hardened, D: Hardened and dry feel.

**[Table 1]**

| | | | Example | | | | | | Control group | | | Comp. Ex. | | | |
|---|---|---|---|---|---|---|---|---|---|---|---|---|---|---|---|
| | | | 1 | 2 | 3 | 4 | 5 | 6 | 1 | 2 | 3 | 1 | 2 | 3 | 4 |
| Amount added (%) | Extract | | 0.5 | 2.0 | 2.0 | 10.0 | 2.0 | 2.0 | - | - | - | - | - | - | - |
| | Water-soluble soybean polysaccharide | | - | - | - | - | 0.2 | 0.2 | - | - | - | 0.05 | 0.2 | 0.2 | 2.0 |
| | Added water | | 150 | 150 | 180 | 180 | 150 | 180 | 140 | 150 | 180 | 150 | 150 | 180 | 180 |
| Organoleptic evaluation results | Looseness | | C | A | A | A | A | A | D | D | D | C | B | C | B |
| | Texture | | C | C | C | C | A | B | A | D | D | C | B | C | C |
| | Storage stability | 24 h | C | C | C | C | A | A | D | C | C | C | B | B | B |
| | | 48 h | D | C | C | D | B | B | D | D | D | D | B | B | C |

Thus, it was possible to obtain cooked rice with a highly satisfactory loosening property when the extract was added to at least 2.0% with respect to the raw rice. Also, addition of the extract at 2.0% and addition of the water-soluble soybean polysaccharide at 0.2%, and with a total water addition of at least 150% with respect to the raw rice, yielded cooked rice imparted with a sufficient loosening property and without any notable reduction in texture due to excessive softening. Furthermore, cooked rice obtained under the same conditions retained its softness and elasticity even when 48 hours had passed after boiling, without any noticeable deterioration in flavor due to starch aging.

### (Example 7)

Cooked rice obtained by boiling under exactly the same conditions as Example 5 was used, and the loosening property of the cooked rice was evaluated immediately after boiling (boiled rice temperature: approximately 80°C) and after cooling (boiled rice temperature: 20°C). An organoleptic evaluation was conducted by 6 panelists.

### (Comparative Example 5)

Example 7 was carried out under exactly the same conditions, except that "BM-206" (product of Jellice Co., Ltd.) with a jelly strength of 73.0 g was used as an animal-derived protein in place of the extract.

### (Comparative Example 6)

Example 7 was carried out under exactly the same conditions, except that "BM-217" (product of Jellice Co., Ltd.) with a jelly strength of 208.0 g was used as an animal-derived protein.

### (Comparative Example 7)

Example 7 was carried out under exactly the same conditions, except that "Gel-up J-3557" (product of San-Ei Gen FFI, Inc.) with a jelly strength of 370.2 g was used as an animal-derived protein.

### (Comparative Example 8)

Example 7 was carried out under exactly the same conditions, except that "BM-229" (product of Jellice Co., Ltd.) with a jelly strength of 409.3 g was used as an animal-derived protein.

The results of organoleptic evaluation of Example 7 and Comparative Examples 5-8 are shown in Table 2. The evaluation criteria were as follows.

### <Evaluation of loosening property>

A: Cooked rice separated into grains and very loose, B: Cooked rice sufficiently loose, C: Cooked rice slightly loose, D: Cooked rice clumped without looseness.

**[Table 2]**

| | | Example | Comp. Ex. | | | |
|---|---|---|---|---|---|---|
| | | 7 | 5 | 6 | 7 | 8 |
| Jelly strength (g) | | 13.8 | 73.0 | 208.0 | 370.2 | 409.3 |
| Looseness | Cooked rice temperature (80°C) | A | B | B | B | B |
| | Cooked rice temperature (20°C) | A | D-C | D | D | D |

Thus, by using extract with a jelly strength of 13.8 g it was possible to yield cooked rice with a sufficient loosening property not only immediately after boiling but also after cooling.

### (Example 8)

Fried rice was prepared using the cooked rice prepared in Example 2. A hot plate was heated to 230°C, and then 8 g of vegetable oil and 250 g of cooked rice were added, and the mixture was fried for 2 minutes to obtain fried rice. The obtained fried rice was then allowed to cool by standing at room temperature and used for an organoleptic evaluation by 6 panelists. The remaining cooked rice was wrapped in 100 g portions and set in a 20°C incubator for 24 hours, after which an organoleptic evaluation was conducted in the same manner by the 6 panelists.

Separately, the remaining fried rice that had been allowed to cool by standing at room temperature after preparation was wrapped in 100 g portions and rapidly frozen at -50°C with a shock freezer. The obtained frozen fried rice was prepared by heating for 2 minutes in a 600 W microwave oven, and an organoleptic evaluation was conducted in the same manner by 6 panelists. The results of the organoleptic evaluation are shown in Table 3.

### (Example 9)

Example 8 was carried out under exactly the same conditions, except for using the cooked rice prepared in Example 5.

### (Comparative Example 9)

Example 8 was carried out under exactly the same conditions, except for using the cooked rice prepared in Comparative Example 2.

### (Comparative Example 10)

Example 8 was carried out under exactly the same conditions, except for using the cooked rice prepared in control group 1.

### <Manageability>

A: Very satisfactory looseness, and easy mixing of cooked rice and oil, B: Satisfactory looseness, mixing of cooked rice and oil, C: Poor looseness but some mixing of cooked rice and oil, D: Sticking between rice grains, difficult to mix.

### <Evaluation of loosening property>

A: Cooked rice loose and separated in mouth, B: Cooked rice sufficiently loose, C: Some portions with poor looseness, D: Cooked rice clumped without looseness.

### <Texture>

A: Very good hardness and elasticity, B: Slightly hard or soft but satisfactory, C: Very hard or soft, D: Hardening, or too soft and sticky.

**[Table 3]**

| | Example 8 | Example 9 | Comp. Ex. 9 | Comp. Ex. 10 |
|---|---|---|---|---|
| Immediately after preparation | | | | |
| · Manageability | A | A | C | D (blocked) |
| · Looseness | A | A | B | C |
| · Texture | C (slightly softened) | A | A | B |

| After 24 h | | | | |
|---|---|---|---|---|
| · Looseness | A | A | B | C |
| · Texture | C | A | A | D (dry) |

| After freezing/thawing | | | | |
|---|---|---|---|---|
| · Looseness | A | A | B | C |
| · Texture | D (softened) | B (slightly softened) | B | C (slightly softened) |

Thus, fried rice obtained using the cooked rice prepared in Example 2 (with the extract added at 2.0% with respect to the raw rice) exhibited a highly satisfactory loosening property, and the manageability during preparation of the fried rice was also satisfactory. In addition, fried rice obtained using the cooked rice prepared in Example 5 (with the extract added at 2.0% and the water-soluble soybean polysaccharides added at 0.2% with respect to the raw rice) similarly exhibited a highly satisfactory loosening property and manageability. Moreover, the cooked rice exhibited the satisfactory loosening property immediately after preparation, after 24 hours of storage and after thawing in a microwave oven, with separation of the grains that is characteristic of delicious fried rice. The texture was also satisfactorily soft and elastic.

## Claims

1. A looseness improving agent for cooked rice comprising as an active ingredient a natural extract containing an animal-derived water-soluble protein that coagulates upon cooling.

2. A looseness improving agent for cooked rice according to claim 1, wherein the natural extract is from the bone and/or meat of an animal such as a pig, chicken, cow or fish.

3. A looseness improving agent for cooked rice according to claim 1 or 2, **characterized in that** the solid content of the extract is at least 1 g and less than 50 g in terms of jelly strength.

4. A method for preparation of a cooked rice product **characterized by** adding a natural extract according to claim 1 or 2 during boiling of rice.

5. A method for preparation of a cooked rice product **characterized in that** the rice is boiled with addition of the natural extract according to claim 1 or 2 in an amount of 0.5-10 wt% with respect to the raw rice.

6. A cooked rice product containing an extract added at 0.5-10 wt% with respect to the raw rice.

7. A quality-improving agent for cooked rice, comprising a natural extract that contains an animal-derived water-soluble protein that coagulates upon cooling and a soybean-derived water-soluble polysaccharide.

8. A looseness improving agent for cooked rice according to claim 7, wherein the natural extract is from the bone and/or meat of an animal such as a pig, chicken, cow or fish.

9. A cooked rice product according to claim 6, wherein the soybean-derived water-soluble polysaccharide is used at 0.05-2% with respect to the raw rice.

10. A method for preparation of a cooked rice product **characterized by** adding a quality-improving agent for cooked rice according to claim 7 or 8 during boiling of rice.

## Amended claims

### Amended claims under Art. 19.1 PCT

**1.** (Amended) A quality-improving agent for cooked rice comprising as an active ingredient a natural extract containing an animal-derived water-soluble protein that coagulates upon cooling.

**2.** (Amended) A quality-improving agent for cooked rice according to claim 1, wherein the natural extract is from the bone and/or meat of an animal such as a pig, chicken, cow or fish.

**3.** (Amended) A quality-improving agent for cooked rice according to claim 1 or 2, **characterized in that** the solid content of the natural extract is at least 1 g and less than 50 g in terms of jelly strength.

**4.** A method for preparation of a cooked rice product **characterized by** adding a natural extract according to claim 1 or 2 during boiling of rice.

**5.** A method for preparation of a cooked rice product **characterized in that** the rice is boiled with addition of the natural extract according to claim 1 or 2 in an amount of 0.5-10 wt% with respect to the raw rice.

**6.** (Amended) A cooked rice product containing a natural extract according to claim 1 added at 0.5-10 wt% with respect to the raw rice.

**7.** A quality-improving agent for cooked rice, comprising a natural extract that contains an animal-derived water-soluble protein that coagulates upon cooling and a soybean-derived water-soluble polysaccharide.

**8.** (Amended) A quality-improving agent for cooked rice according to claim 7, wherein the natural extract is from the bone and/or meat of an animal such as a pig, chicken, cow or fish.

**9.** (Amended) A cooked rice product according to claim 6, wherein the soybean-derived water-soluble polysaccharide is used at 0.05-2 wt% with respect to the raw rice.

**10.** A method for preparation of a cooked rice product **characterized by** adding a quality-improving agent for cooked rice according to claim 7 or 8 during boiling of rice.
